# EUROPEAN PATENT SPECIFICATION

(11) **EP 2 168 199 B1**
(45) Date of publication and mention of the grant of the patent: **25.03.2015**
(21) Application number: 08766290.4
(22) Date of filing: 13.06.2008
(51) Int. Cl.: H01M 4/13, H01M 10/052, H01M 10/0567, H01M 10/0569, H01M 4/02

(54) **NON-AQUEOUS ELECTROLYTE AND ELECTROCHEMICAL DEVICE COMPRISING THE SAME**
NICHTWÄSSRIGER ELEKTROLYT UND ELEKTROCHEMISCHE VORRICHTUNG DENSELBEN UMFASSEND
ÉLECTROLYTE NON-AQUEUX ET DISPOSITIF ÉLECTROCHIMIQUE LE COMPRENANT

(30) Priority: 15.06.2007 KR 20070059134
(43) Date of publication of application: 31.03.2010
(73) Proprietor: LG Chem, Ltd., Youngdungpo-gu, Seoul 150-721 (KR)
(72) Inventor: JEON, Jong-Ho, Daejeon 305-340 (KR); CHO, Jeong-Ju, Daejeon 305-738 (KR); LEE, Ho-Chun, Daejeon 305-738 (KR)
(74) Representative: Hoffmann Eitle
(86) International application number: PCT/KR2008/003328
(87) International publication number: WO 2008/153347

(56) References cited:
- EP-A1- 1 030 399
- WO-A1-2007/055087
- WO-A1-2008/023951
- WO-A1-2008/044850
- WO-A1-2008/050971
- JP-A- 2004 281 073
- KR-A- 20060 033 920
- US-A1- 2004 072 080
- US-B2- 7 083 878
- US-B2- 7 223 502

## Description

### Technical Field

The present invention relates to a non-aqueous electrolyte and an electrochemical device having the same. More particularly, the present invention relates to a non-aqueous electrolyte containing an ester compound and a compound having an S=O group, and an electrochemical device having the non-aqueous electrolyte.

### Background Art

Recently, interest in energy storage technologies has increased. As the energy storage technologies are extended to such devices as cellular phones, camcorders and notebook PCs, and further to electric vehicles, endeavors for research and development of electrochemical devices have become more focused. Therefore, the electrochemical devices have been drawing attention in this aspect, and interest has focused on the development of rechargeable secondary batteries. Recently, new electrode and battery designs are being studied and developed to improve the capacity density and specific energy.

Among currently used secondary batteries, a lithium secondary battery developed in the early 1990's includes a cathode having lithium metal composite oxide or sulfur that allows intercalation and disintercalation of lithium ions, an anode containing carbon material or lithium metal, and an electrolyte prepared by dissolving a suitable amount of lithium salt in a mixed organic solvent.

The lithium secondary battery has an average discharge voltage of about 3.6V to about 3.7V, which is advantageously higher than those of other batteries such as alkali batteries or nickel-cadmium batteries. To create such a higher operation voltage, an electrolyte composition should be electrochemically stable in a charging/discharging voltage range from about 0V to about 4.2V. For this purpose, a mixed solvent in which a cyclic carbonate compound such as ethylene carbonate or propylene carbonate and a linear carbonate compound such as dimethyl carbonate, ethylmethyl carbonate or diethyl carbonate are suitably mixed is used as a solvent for the electrolyte. A solute of electrolyte commonly employs a lithium salt such as LiPF₆, LiBF₄ and LiClO₄, which acts as a source of lithium ions in a battery and thus enables the lithium battery to operate.

Lithium ions coming out from a cathode active material such as lithium metal oxide during an initial charging process of a lithium secondary battery are moved to an anode active material such as graphite and then intercalated between layers of the anode active material. At this time, due to the high reactivity of lithium, the electrolyte reacts with carbon of the anode active material on the surface of the anode active material, such as graphite, thereby generating compounds such as Li₂CO₃, Li₂O and LiOH. These compounds form a kind of SEI (Solid Electrolyte Interface) film on the surface of the anode active material, such as graphite.

The SEI film plays the role of an ion tunnel, which allows only lithium ions to pass. Due to the ion tunnel effects, the SEI film prevents organic solvent having high molecular weight from moving together with lithium ions in the electrolyte and being inserted into layers of the anode active material and thus breaking down the anode structure. Thus, since the electrolyte is not contacted with the anode active material, the electrolyte is not decomposed, and also the amount of lithium ions in the electrolyte is reversibly maintained, thereby ensuring stable charging/discharging.

However, in a thin angled battery, while the above SEI film is formed, gas such as CO, CO₂, CH₄ and C₂H₆, generated by decomposition of a carbonate-based solvent, increases the battery thickness during the charging process. In addition, if a battery is left at a high temperature in a fully charged state, the SEI film is slowly broken down due to increased electrochemical energy and thermal energy over time. As a result, side reactions continuously occur between the exposed surface of the anode and surrounding electrolyte. Due to continuous gas generation at this time, an inner pressure of the battery in the angled or pouched type is increased, thereby increasing the thickness of the battery, and this may cause problems in electronics such as cellular phones and notebook computers with regard to high-temperature performance of the battery.

In order to reduce the increase of the internal pressure of the battery, it has been suggested to use a method of adding an additive to the electrolyte so as to change the phase of the SEI film forming reaction. However, it is well known in the art that, when the above specific compound is added to an electrolyte to improve the battery per-formance, some areas of performance are improved, but other areas of performance may deteriorate in many cases.

Meanwhile, a non-aqueous solvent included in an electrolyte of a conventional lithium secondary battery generally employs a mixed solvent containing a large amount of a cyclic carbonate compound with a high dielectric constant such as ethylene carbonate and a suitable amount of a linear carbonate compound with a low viscosity such as dimethyl carbonate or diethyl carbonate.

However, the lithium secondary battery containing a large amount of ethylene carbonate exhibits a more serious problem in inner pressure increase of the battery since the SEI film is unstable. In addition, since ethylene carbonate having a high freezing point (about 37 to about 39°C) is in a solid state at room temperature, it,has low ionic conductivity at a low temperature. Thus, a battery using a non-aqueous solvent containing a large amount of ethylene carbonate shows a poor low-temperature conductivity.

To solve this problem and provide a lithium secondary battery with excellent high-rate discharging characteristics at a low temperature, Japanese Laid-open Patent Publication No. H07-153486 discloses a lithium secondary battery using an electrolyte made by adding 0.5 to 50 volume% of γ-butyrolactone to a 1:1 (volume ratio) mixture of ethylene carbonate and dimethyl carbonate. However, if γ-butyrolactone is added in this manner, the life cycle of the battery may be shortened though the high-rate discharging characteristic at a low temperature is improved.

Japanese Laid-open Patent Publication No. H05-182689 and H04-284374 reported that charging/discharging characteristics at room and low temperatures may be improved using a linear ester compound with a low viscosity as an additive/solvent of an electrolyte. However, the linear ester compound has high reactivity with a graphite-based anode, so this problem must also be solved. This problem occurs especially when the anode has a large specific surface area. The larger the specific surface area of the anode, the more the linear ester compound reacts with the anode active material. Consequently, an excessive reduction reaction of the anode is induced. This side reaction proceeds more rapidly at a high temperature, resulting in a decline in the battery performances.

Thus, there is a demand for developing a lithium battery capable of providing a sufficient life cycle, effective high-temperature stability and effective low-temperature discharging characteristics by changing the composition of the non-aqueous mixture solvent used in an electrolyte of a conventional lithium secondary battery.
EP 1 030 399 describes a non-aqueous electrolytic solution cell which comprises a negative electron containing lithium as an active material, a positive electrode, a non-aqueous electrolytic solution consisting of a solute and organic solvent, a separator, and an outer can, the organic solvent containing at least one of the compounds represented by a specific formula which are exemplified as ethylene sulfite, dimethyl sulfite, sulfolan, sulfone and 1,3-propane sulfone.

WO 2007/055087 describes a lithium secondary battery comprising at least a non-aqueous electrolyte containing a cyclic siloxane compound having a specified formula, a specific fluoro silane compound, nitric acid salt, nitrous acid salt, monofluoro phosphoric acid salt, difluoro phosphoric acid salt, acetic acid salt or propionic acid salt in an amount of 10 ppm or more of the whole non-aqueous electrolyte. Such a battery can be fabricated to have a large size.

JP 2004-281073 relates to a non-aqueous electrolyte having an excellent high temperature preservability and excellent continuous charging properties in case of a secondary battery. The non-aqueous electrolyte contains an inorganic lithium salt and an organic lithium salt as the lithium salts, and the non-aqueous solvent contains a linear carbonate in an amount of 10 volume-% and an ethylene sulfite.

US 2004/072080 describes the provision of a non-aqueous electrolyte secondary cell having a high temperature cycle characteristics and a good high temperature standing resistance wherein the non-aqueous electrolyte includes a vinylene carbonate derivative, a cyclic sulfite derivative and a phenyl cycloalkane derivative and/or an alkyl benzene derivative having a quaternary carbon directly bonded to a benzene ring.

US 7,083,878 relates to non-aqueous electrolytic solution and a lithium secondary battery using the same. The electrolytic solution contains a lithium salt and a non-aqueous solvent wherein the lithium salt is LiPf₆. The non-aqueous solvent mainly contains ethylene carbonate and/or propylene carbonate, a symmetric linear carbonate, an asymmetric linear carbonate and vinylene carbonate.

US 7,223,502 reveals a non-aqueous electrolyte comprising a non-aqueous organic solvent and a lithium salt wherein the non-aqueous organic solvent contains at least one component selected from the group consisting of acid anhydrides and carbonic esters having an unsaturated bond, and at least one compound selected from the group consisting of sulfonic compounds and fluorine containing aromatic compounds having at most 9 carbon atoms.

### Disclosure of Invention

### Technical Problem

The present inventors have found that the high reactivity with a graphite-based anode, caused by using a propionate-based compound as an electrolyte additive or solvent, is minimized when a compound having an S=O group is also used in mixture.

Also, in the preparation of the secondary battery, an anode binder may be used. The binder may vary depending on the specific surface area size of the anode. In particular, organic-based binder such as Poly Vinylidene Fluorides (PVDFs) may be employed for the anode having a small specific surface area of less than about 1.5 m²/g. On the other hand, water-soluble binders such as Styrene Butadiene Rubbers (SBRs) may be employed for the anode having a large specific surface area of more than about 1.5 m²/g. It is a fact that the larger the specific surface area of the anode, the more propionate-based ester compound reacts with the anode active material. As a result, use of a PVDF- based binder may lead to acceptable side reductive reactions between the anode and the propionate-based ester compound. However, an SBR-based binder promotes excessive reductive reactions between the two. The side reactions proceed more rapidly at a high temperature, resulting in a decline of the battery performance. Therefore, the secondary battery fabricated by using the water- soluble binder requires an anode inhibitor such as as compound having an S=O group for preventing the side reactions.

Thus, an object of the present invention is directed to providing a non-aqueous electrolyte including a compound having an S=O group together with the propionate-based ester compound, and an electrochemical device having the non-aqueous electrolyte.

### Technical Solution

In order to accomplish the above object, the present invention provides a non-aqueous electrolyte, which includes (i) a compound having an S=O group; (ii) a mixed organic solvent containing a carbonate and a propionate-based ester compound expresed by the following Chemical Fomula 1; and (iii) an electrolyte salt.

The compound having an S=O group is at least one compound selected from the group consisting of cyclic sulfite, saturated sultone, unsaturated sultone, and non-cyclic sulfone. 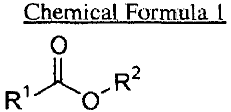 where R¹ is a CH₃CH₂ group and R² is an alkyl group of C₁ to C₆ or a haloalkyl group of C₁ to C₆, respectively.

In another aspect of the present invention, there is also provided an electrochemical device, including a cathode, an anode and a non-aqueous electrolyte, wherein the non-aqueous electrolyte is prepared as above according to the present invention.

### Best Mode for Carrying Out the Invention

Hereinafter, a preferred embodiment of the present invention will be described in detail.

A non-aqueous electrolyte of the present invention may include a compound having an S=O group. The compound having an S=O group is a compound that forms an electrode film prior to the carbonate and the propionate-based ester compound expressed by the Chemical Formula 1 at an initial charging stage.
The propionate-based ester compound has a problem of high reactivity with a graphite-based anode. However, if the compound having an S=O group is included together in the non-aqueous electrolyte, the compound having an S=O group may decompose prior to the carbonate and the ester compound,, thereby forming an electrode film, preferably an anode film befvore the carbonate and the propionate-based ester compound. Accordingly, the problem of reactivity between the propionate-based ester compound and the anode can be solved, and also it is possible to improve the performance of an electrochemical device (for example, a secondary battery) having such a non-aqueous electrolyte.

In the compound having an S=O group, the cyclic sulfite may be a cyclic sulfite expressed by the following Chemical Formula 2. 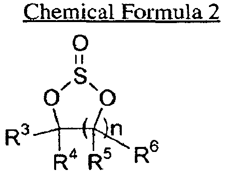 where R³ to R⁶ are independently a hydrogen atom, a halogen atom, an alkyl group of C₁ to C₆, or a haloalkyl group of C₁ to C₆, respectively, and n is an integer of 1 to 3.

Non-limiting examples of the cyclic sulfite expressed by the Chemical Formula 2 may include ethylene sulfite, methyl ethylene sulfite, ethyl ethylene sulfate, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite. These compounds may be used alone or in combination.

In addition, the saturated sultone may be a saturated sultone expressed by the following Chemical Formula 3. 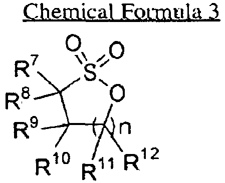 where R⁷ to R¹² are independently a hydrogen atom, a halogen atom, an alkyl group of C₁ to C₆, or a haloalkyl group of C₁ to C₆, respectively, and n is an integer of 0 to 3.

In the above Chemical Formula 3, the saturated sultone may include 1,3-propane sultone and 1,4-butane sultone, but it is not limited thereto. In addition, these compounds may be employed alone or in combination.

The unsaturated sultone may be an unsaturated sultone expressed by the following Chemical Formula 4. 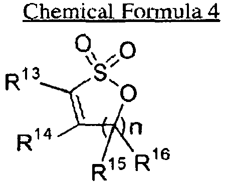 where R¹³ to R¹⁶ are independently a hydrogen atom, a halogen atom, an alkyl group of C₁ to C₆, or a haloalkyl group of C₁ to C₆, respectively, and n is an integer of 0 to 3.

As non-limiting examples, the unsaturated sultone expressed by the Chemical Formula 4 may include ethene sultone, 1,3-propene sultone, 1,4-butene sultone, and 1-methyl-1,3-propene sultone. These compounds may be used alone or in combination.

In addition, the non-cyclic sulfone is a non-cyclic sulfone expressed by the following Chemical Formula 5. 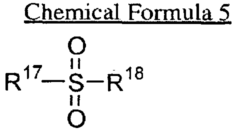 where R¹⁷ and R¹⁸ are independently an alkyl group of C₁ to C₆, a haloalkyl group with C₁ to C₆, an alkenyl group with C₂ to C₆, a haloalkenyl group with C₂ to C₆, an aryl group with C₆ to C₁₈, or a haloaryl group with C₆ to C₁₈, respectively.

As non-limiting examples, the non-cyclic sulfone expressed by the Chemical Formula 5 may include divinyl sulfone, dimethyl sulfone, dimethyl sulfone, methyl ethyl sulfone, and methyl vinyl sulfone.

The compound having an S=O group is preferably included in the non-aqueous electrolyte at a content of about 0.5 to about 5 weight%. If the content of the compound having an S=O group in the non-aqueous electrolyte is less than about 0.5 weight%, the life cycle of the battery is not sufficiently extended. If the content exceeds about 5 weight%, there may occur problems such as gas generation or increase of impedance.

The non-aqueous electrolyte according to the present invention includes a mixed organic solvent, which may include a carbonate and an ester compound expressed by the Chemical Formula 1.

As non-limiting examples, the ester compound expressed by the Chemical Formula 1 may include methyl propionate, ethyl propionate, and propyl propionate. Such ester compounds may be used alone or in combination.
The propionate-based ester compound expressed by the Chemical Formula 1 is preferably included in the non-aqueous electrolyte at a content of about 3 to about 80 weight%. If the content of said ester compound expressed by the Chemical Formula 1 in the non-aqueous electrolyte is less than about 3 weight%, the low-temperature and high-rate characteristics are not sufficiently improved. If the content exceeds about 80 weight%, irreversible reactions are increased, which may deteriorate the performance of an electrochemical device.

The carbonate may be any kind of carbonate, as long as it is commonly used as an organic solvent of a non-aqueous electrolyte. For example, it may be a cyclic carbonate and/or a linear carbonate.

The cyclic carbonate may be ethylene carbonate (EC), propylene carbonate (PC), butylene carbonate (BC), pentylene carbonate, fluoroethylene carbonate (FEC), and so on, and the linear carbonate may be diethyl carbonate (DEC), dimethyl carbonate (DMC), dipropyl carbonate (DPC), dibutyl carbonate, ethyl methyl carbonate (EMC), methyl propyl carbonate (MPC), methyl isopropyl carbonate, methyl butyl carbonate, ethyl propyl carbonate, and so on, but it is not limited thereto. Also, halogen derivatives thereof may be used. In addition, these compounds may be used alone or in combination.

In the non-aqueous electrolyte of the present invention, the mixed organic solvent may be other organic solvents in addition to the ester compound expressed by the Chemical Formula 1 and the carbonate.

Additionally useable organic solvents is not especially limited if they may be used as an organic solvent of a common non-aqueous electrolyte, and they may be lactone, ether, ester, acetonitrile, lactam, and/or ketone.

As non-limiting examples, the lactone may include γ-butyrolactone (GBL). The ether may be dibutyl ether, tetrahydrofuran, 2-methyltetrahydrofuran, 1,4-dioxane, 1,2-dimethoxyethane, 1,2-diethoxyethane, and so on, but it is not limited thereto. An example of the ester compound may include methyl formate, ethyl formate, propyl formate, and so on. In addition, an example of the lactam may include N-methyl-2-pyrrolidone (NMP). An example of the ketone may include polymethylvinyl ketone. Also, halogen derivatives of the above organic solvents may be used. These organic solvents may be used alone or in combination.

The non-aqueous electrolyte of the present invention includes an electrolyte salt, and the electrolyte salt is not specially limited if it can be used as an electrolyte salt of a common non-aqueous electrolyte.

The electrolyte salt may include a mixture of a cation selected from the group consisting of Li⁺, Na⁺, and K⁺, and an anion selected from the group consisting of PF₆⁻, BF₄⁻, Cl⁻, Br, I⁻, ClO₄⁻, AsF₆⁻, CH₃CO₂⁻, CF₃SO₃⁻, N(CF₃SO₂)₂⁻, and C(CF₂SO₂)₃⁻, but it is not limited thereto. These electrolyte salts may be used alone or in combination. In particular, a lithium salt is preferred as the electrolyte salt. In addition, the electrolyte salt may be included at a concentration of about 0.8 to about 2.0M with respect to the mixed organic solvent.

Meanwhile, an electrochemical device of the present invention includes a cathode, an anode and a non-aqueous electrolyte, and the non-aqueous electrolyte is a non-aqueous electrolyte prepared as above according to the present invention.

The electrochemical device of the present invention may include any device that employs electrochemical reactions. In more detail, all kinds of primary batteries, secondary batteries, solar cells or capacitors are included in the scope of an electrochemical device. A secondary battery is preferred as the electrochemical device, among which a lithium secondary battery such as a lithium metal secondary battery, a lithium ion secondary battery, a lithium polymer secondary battery or a lithium ion polymer secondary battery is more preferred.

The electrochemical device of the present invention may be manufactured according to a common knowledge well known in the art. For example, the electrochemical device may be manufactured by inserting a porous separator in between a cathode and an anode, and then injecting the non-aqueous electrolyte according to the present invention therein.

An electrode employed in the electrochemical device may be made by a common method well known in the art. For example, the electrode may be made by mixing the components of a solvent, and optionally a binder, conductive material and dispersing agent with an electrode active material and stirring these to prepare slurry, coating a current collector with the slurry, and then compressing and drying it.

The electrode active material may employ a cathode active material or an anode active material.

Non-limiting examples of the cathode active material may include a lithium transition metal composite oxide such as LiMₓO_{y} (M = Co, Ni, Mn, or CoₐNi_{b}Mn_{c})(for example, lithium manganese composite oxide such as LiMn₂O₄, lithium nickel oxide such as LiNiO₂, lithium cobalt oxide such as LiCoO₂, any material obtained by substituting a portion of the manganese, nickel or cobalt of the above oxides with another transition metal, vanadium oxide containing lithium, or the like) or a chalcogen compound, such as for example, manganese dioxide, titanium disulfide, molybdenum disulfide, or the like.

An anode active material may be any material commonly usable for an anode of a conventional electrochemical device, and the anode active material may include lithium metal, lithium alloy, carbon, petroleum coke, activated carbon, graphite, carbon fiber, or the like. In addition, a metal oxide such as TiO₂ and SnO₂, which allows intercalation and disintercalation of lithium ions and has a potential of less than about 2V to lithium, may be used. In particular, carbon material such as carbon fiber or activated carbon is preferred.

As a binder, those commonly used in the preparation of the secondary battery may be employed. The binders may vary depending on the specific surface area size of the anode. In particular, organic-based binders such as PVDFs may be employed for the anode having a small specific surface area of less than about 1.5m²/g, preferably from about 0.5 to about 1.5m²/g. Also, for the anode having a large specific surface area of More than about 1.5m²/g, preferably from 1.5m²/g to 4.5 (m²/g), water-soluble binders may be employed. As the water-soluble binders, an acrylic binders and styrene-butadiene copolymer (SBR), modified styrene-butadiene copolymer, etc are exemplified. Water-soluble SBR is more preferable.

A current collector made of metal material may be any metal with high conductivity, if allows easy adhesion of the slurry to the electrode active material and has no reactivity within a potential range of the battery. Non-limiting examples of the cathode current collector may include a foil made of aluminum, nickel, or their combinations. Non-limiting examples of the anode current collector may include a foil made of copper, gold, nickel, copper alloys or their combinations.

The electrochemical device of the present invention may include a separator. The separator is not particularly limited, but a porous separator may be used, such as for example polypropylene-based, polyethylene-based or polyolefin-based porous separators.

There is no particular limitation regarding the type of shape of the electrochemical device of the present invention, but the battery may be provided in a cylindrical can shape, an angled shape, a pouch shape or a coin shape.

### Mode for the Invention

Hereinafter, the present invention is explained in more detail using Embodiments and Comparative Examples.

### Embodiment 1

LiPF₆ was dissolved to have 1M concentration in a mixed organic solvent in which ethylene carbonate (EC) and ethyl propionate (EP) are mixed in a volume ratio of 3:7, and then propane sultone was added to the solvent to have the content of 3 weight%, thereby making a non-aqueous electrolyte.

A battery with a coin shape was manufactured in a conventional way using the non-aqueous electrolyte prepared as above, and also using LiCoO₂ as a cathode active material, artificial graphite as an anode active material and SBR as a binder.

### Embodiment 2

An electrolyte was prepared and a battery having the electrolyte was manufactured in the same way as in the Embodiment 1, except that ethylene sulfite was added instead of propane sultone.

### Embodiment 3

LiPF₆ was dissolved to have a 1M concentration in a mixed organic solvent in which ethylene carbonate (EC) and propyl propionate (PP) are mixed in a volume ratio of 3:7, and then propane sultone was added to the solvent to a content of 3 weight%, thereby preparing a non-aqueous electrolyte.

A battery with a coin shape was manufactured in a conventional way using the non-aqueous electrolyte prepared as above, and also using LiCoO₂ as a cathode active material, artificial graphite as an anode active material, and SBR as a binder.

### Embodiment 4

An electrolyte was prepared and a battery having the electrolyte was manufactured in the same way as in the Embodiment 3, except that ethylene sulfite was added instead of propane sultone.

### Comparative Example 1

A battery was manufactured in the same way as in the Embodiment 1, except that a non-aqueous electrolyte was prepared by dissolving LiPF₆ to a 1M concentration in a mixed organic solvent in which ethylene carbonate (EC) and ethyl propionate (EP) are mixed in a volume ratio of 3:7.

### Comparative Example 2

A battery was manufactured in the same way as in the Embodiment 1, except that an non-aqueous electrolyte was made by dissolving LiPF₆ to a 1M concentration in a mixed organic solvent in which ethylene carbonate (EC) and propyl propionate (PP) are mixed in a volume ratio of 3:7.

### Cycle Life Characteristic Test

The coin batteries manufactured according to the Embodiments 1 to 4 and Comparative Examples 1 and 2 were respectively charged at room temperature at a 0.1C to 4.2V current rate under a constant current/constant voltage condition and then discharged at a 0.1C to 3.0V current rate under a constant current condition, which is called an initial charging/discharging process. a ratio of charge capacity to discharge capacity is called an initial efficiency. After the initial charging/discharging process, the batteries were charged/discharged 100 times by 0.5C. Then, a sustainable yield of capacity in comparison to the initial discharge capacity was measured, as shown in the following Table 1.

As seen from the Table 1, it is understood that the life cycle is improved in the case that the compound having an S=O group is used in admixture with the ester compound (the Embodiments 1 to 4) as compared to the case that ester compound is used alone (the Comparative Examples 1 and 2).

### Low-Temperature Discharge Test

The coin batteries manufactured according to the Embodiments 1 to 4 and Comparative Examples 1 and 2 were respectively charged/discharged 5 times at 0.5C current rate after the initial charging/discharging process at a room temperature, then charged to 4.2V at a 0.5C current rate, and then discharged at a 0.5C current rate at a low-temperature chamber of -20°C. A ratio of 0.5C discharge capacities at a room temperature and -20°C is shown in the following Table 1.

As seen from the Table 1, it is understood that the low-temperature discharge capacity is improved in the case that the compound having an S=O group is used in admixture with the ester compound (the Embodiments 1 to 4) as compared to the case that the ester compound is used alone (the Comparative Examples 1 and 2).

### High-rate Charging/Discharging Test

The coin batteries manufactured according to the Embodiments 1 to 4 and Comparative Examples 1 and 2 were respectively initially charged/discharged at a room temperature, and then following cycle of (0.5C charging, 0.5C discharging), (0.5C charging, 1.0C discharging), (0.5C charging, 1.5C discharging) and (0.5C charging, 2.0C discharging) was repeated three times. A sustainable yield of capacity to the initial discharge capacity is shown in the following Table 1.

As seen from the Table 1, it is understood that the high-rate discharge capacity is improved in the case that the compound having an S=O group is used in mixture with the ester compound (the Embodiments 1 to 4) as compared to the case that the ester compound is used alone (the Comparative Examples 1 and 2).

### Comparison of OCV Drop at High-Temperature Storage

The coin batteries manufactured according to the Embodiments 1 to 4 and Comparative Examples 1 and 2 were respectively charged to 4.2V, then heated to 65°C at a normal temperature for 1 hour, and then kept at 65°C for 24 hours. After that, the batteries were cooled from 65°C for 1 hour, and then the variation of OCV (Open Circuit Voltage) of the batteries was measured. The measurement results are shown in the following Table 1.

As seen from the following Table 1, it is apparent that OCV drop occurs less in the case that the compound having an S=O group is used in mixture with the ester compound (the Embodiments 1 to 4) as compared to the case that the ester compound is used alone (the Comparative Examples 1 and 2). The OCV drop is proportional to the self-discharging amount of the battery, which is again proportional to the reactivity between the anode and the ester compound. Thus, it is evident that the reactivity between an anode and the ester compound may be reduced when a compound having an S=O group is used in admixture with the ester compound.

Table 1

**[Table 1] [Table ]**

| | InitialEfficiency( %) | Life cycleafter 100 times charging/ discharging(%) | Low-temperature(-20°C) discharge capacity (%) | High-rate discharge capacity (%) | | | | OCV drop(V) |
|---|---|---|---|---|---|---|---|---|
| | | | | 0.5C | 1.0C | 1.5C | 2.0C | |
| Embodiment 1 | 94.6 | 85 | 59.3 | 95.4 | 91.4 | 85.9 | 63.2 | -0.057 |
| Embodiment 2 | 93.1 | 84 | 59.8 | 95.7 | 91.3 | 86.2 | 64.7 | -0.063 |
| Embodiment 3 | 95.7 | 87 | 57.5 | 94.1 | 91.1 | 85.1 | 62.1 | -0.021 |
| Embodiment 4 | 94.3 | 85 | 58.2 | 94.0 | 91.8 | 85.5 | 63.4 | -0.030 |
| Comparative Example 1 | 91.0 | 74 | 57.0 | 95.5 | 91.3 | 85.2 | 62.7 | -0.335 |
| Comparative Example 2 | 92.2 | 81 | 55.1 | 93.7 | 90.9 | 83.1 | 59.8 | -0.141 |

### Industrial Applicability

The present invention provides an effective composition for a non-aqueous electrolyte, which may improve high-rate discharge characteristics and low-temperature discharge characteristics together with ensuring excellent high-temperature storage stability and excellent life cycle characteristics for a secondary battery, and accordingly it is possible to improve the performance of electrochemical devices.

## Claims

1. A secondary battery, comprising a cathode, an anode, a separator between the cathode and the anode, a binder for the anode, and a non-aqueous electrolyte, wherein the anode has a specific surface area of at least 1.5m²/g,
wherein the non-aqueous electrolyte comprises (i) a compound having an S=O group; (ii) a mixed organic solvent containing a carbonate and a propionate-based ester compound expressed by the following Chemical Formula 1; and (iii) an electrolyte salt, in which the compound having an S=O group is at least one material selected from the group consisting of cyclic sulfite, saturated sultone, unsaturated sultone, and non-cyclic sulfone;
wherein the binder is a water-soluble binder, and
wherein the compound having the S=O group forms an electrode film prior to the carbonate and the ester compound having the Chemical Formula 1: 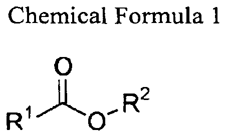 where R¹ is a CH₃CH₂ group and R² is an alkyl group of C₁ to C₆ or a haloalkyl group of C₁ to C₆.

2. The battery according to claim 1, wherein the cyclic sulfite is a cyclic sulfite expressed by the following Chemical Formula 2: 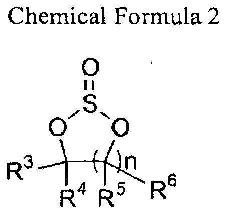 where R³ to R⁶ are independently a hydrogen atom, a halogen atom, an alkyl group of C₁ to C₆, or a haloalkyl group of C₁ to C₆, respectively, and n is an integer of 1 to 3.

3. The battery according to claim 1, wherein the saturated sultone is a saturated sultone expressed by the following Chemical Formula 3: 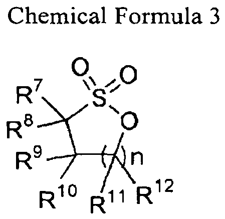 where R⁷ to R¹² are independently a hydrogen atom, a halogen atom, an alkyl group of C₁ to C₆, or a haloalkyl group of C₁ to C₆, respectively, and n is an integer of 0 to 3.

4. The battery according to claim 1, wherein the unsaturated sultone is an unsaturated sultone expressed by the following Chemical Formula 4: 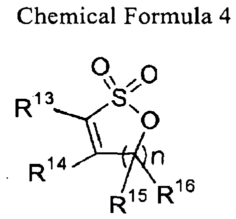 where R¹³ to R¹⁶ are independently a hydrogen atom, a halogen atom, an alkyl group of C₁ to C₆, or a haloalkyl group of C₁ to C₆, respectively, and n is an integer of 0 to 3.

5. The battery according to claim 1, wherein the non-cyclic sulfone is a non-cyclic sulfone expressed by the following Chemical Formula 5: 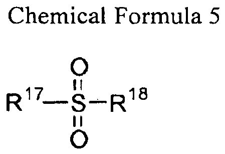 where R¹⁷ and R¹⁸ are independently an alkyl group of C₁ to C₆, a haloalkyl group with C₁ to C₆, an alkenyl group with C₂ to C₆, a haloalkenyl group with C₂ to C₆, an aryl group with C₆ to C₁₈, or a haloaryl group with C₆ to C₁₈, respectively.

6. The battery according to claim 1, wherein the cyclic sulfite is at least one material selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite.

7. The battery according to claim 1, wherein the saturated sultone is at least one material selected from the group consisting of 1,3-propane sultone and 1,4-butane sultone.

8. The battery according to claim 1, wherein the unsaturated sultone is at least one material selected from the group consisting of ethene sultone, 1,3-propene sultone, 1,4-butene sultone, and 1-methyl-1,3-propene sultone.

9. The battery according to claim 1, wherein the non-cyclic sulfone is at least one material selected from the group consisting of divinyl sulfone, dimethyl sulfone, diethyl sulfone, methyl ethyl sulfone, and methyl vinyl sulfone.

10. The battery according to claim 1, wherein the propionate-based ester compound expressed by the Chemical Formula 1 is at least one material selected from the group consisting of methyl propionate, ethyl propionate, propyl propionate, and butyl propionate.

11. The battery according to claim 1, wherein the compound having an S=O group is included in the non-aqueous electrolyte at a content of 0.5 to 5 weight%.

12. The battery according to claim 1, wherein the carbonate is at least one material selected from the group consisting of a cyclic carbonate and a linear carbonate.

13. The secondary battery according to clam 1, wherein the anode has a specific surface area range from 1.5 m²/g to 4.5 m²/g.

## Patentansprüche

1. Sekundärbatterie, umfassend eine Kathode, eine Anode, einen Separator zwischen der Kathode und der Anode, ein Bindemittel für die Anode und einen nichtwässrigen Elektrolyten, worin die Anode eine spezifische Oberfläche von wenigstens 1,5 m²/g hat,
worin der nichtwässrige Elektrolyt (i) eine Verbindung mit einer S=O-Gruppe; (ii) ein gemischtes organisches Lösungsmittel mit einem Carbonat und einer Esterverbindung auf Propionatbasis mit der folgenden chemischen Formel 1; und (iii) ein Elektrolytsalz enthält, worin die Verbindung mit einer S=O-Gruppe zumindest ein Material ist, ausgewählt aus der Gruppe bestehend aus cyclischem Sulfit, gesättigtem Sulton, ungesättigtem Sulton und nichtcyclischem Sulfon,
worin das Bindemittel ein wasserlösliches Bindemittel ist, und
worin die Verbindung mit der S=O-Gruppe einen Elektrodenfilm vor dem Carbonat und der Esterverbindung mit der chemischen Formel 1 bildet: 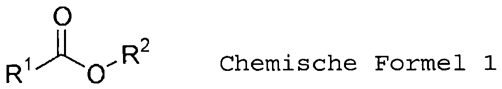 worin R¹ eine CH₃CH₂-Gruppe und R² eine C₁₋₆-Alkylgruppe oder C₁₋₆-Haloalkylgruppe ist.

2. Batterie nach Anspruch 1, worin das cyclische Sulfit ein cyclisches Sulfit mit der folgenden chemische Formel 2 ist: 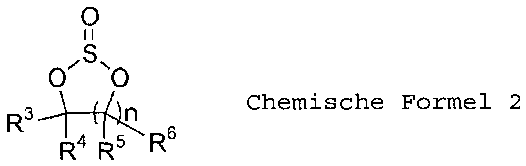 worin R³ bis R⁶ unabhängig ein Wasserstoffatom, Halogenatom, eine C₁₋₆-Alkylgruppe oder C₁₋₆-Haloalkylgruppe sind und n eine ganze Zahl von 1 bis 3 ist.

3. Batterie nach Anspruch 1, worin das gesättigte Sulton ein gesättigtes Sulton mit der folgenden chemischen Formel 3 ist: 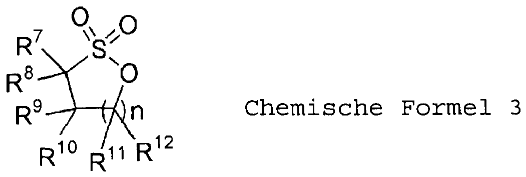 worin R⁷ bis R¹² unabhängig ein Wasserstoffatom, Halogenatom, eine C₁₋₆-Alkylgruppe oder C₁₋₆-Haloalkylgruppe sind und n eine ganze Zahl von 0 bis 3 ist.

4. Batterie nach Anspruch 1, worin das ungesättigte Sulton ein ungesättigtes Sulton mit der folgenden chemischen Formel 4 ist: 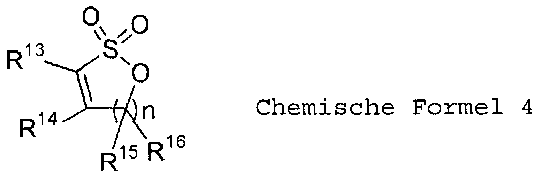 worin R¹³ bis R¹⁶ unabhängig ein Wasserstoffatom, Halogenatom, eine C₁₋₆-Alkylgruppe oder C₁₋₆-Haloalkylgruppe sind und n eine ganze Zahl von 0 bis 3 ist.

5. Batterie nach Anspruch 1, worin das nichtcyclische Sulfon ein nichtcyclisches Sulfon mit der folgenden chemischen Formel 5 ist: 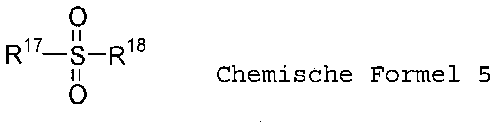 worin R¹⁷ und R¹⁸ unabhängig eine C₁₋₆-Alkylgruppe, C₁₋₆-Haloalkylgruppe, C₂₋₆-Alkenylgruppe, C₂₋₆-Haloalkenylgruppe, C₆₋₁₈-Arylgruppe oder C₆₋₁₈-Haloarylgruppe sind.

6. Batterie nach Anspruch 1, worin das cyclische Sulfit zumindest ein Material ist, ausgewählt aus der Gruppe bestehend aus Ethylensulfit, Methylethylensulfit, Ethylethylensulfit, 4,5-Dimethylethylensulfit, 4,5-Diethylethylensulfit, Propylensulfit, 4,5-Dimethylpropylensulfit, 4,5-Diethylpropylensulfit, 4,6-Dimethylpropylensulfit, 4,6-Diethylpropylensulfit und 1,3-Butylenglycolsulfit.

7. Batterie nach Anspruch 1, worin das gesättigte Sulton zumindest ein Material ist, ausgewählt aus der Gruppe bestehend aus 1,1-Propansulton und 1,4-Butansulton.

8. Batterie nach Anspruch 1, worin das ungesättigte Sulton zumindest ein Material ist, ausgewählt aus der Gruppe bestehend aus Ethensulton, 1,3-Propensulton, 1,4-Butensulton und 1-Methyl-1,3-propensulton.

9. Batterie nach Anspruch 1, worin das nichtcyclische Sulfon zumindest ein Material ist, ausgewählt aus der Gruppe bestehend aus Divinylsulfon, Dimethylsulfon, Diethylsulfon, Methylethylsulfon und Methylvinylsulfon.

10. Batterie nach Anspruch 1, worin die Esterverbindung auf Propionatbasis mit der chemischen Formel 1 zumindest ein Material ist, ausgewählt aus der Gruppe bestehend aus Methylpropionat, Ethylpropionat, Propylpropionat und Butylpropionat.

11. Batterie nach Anspruch 1, worin die Verbindung mit einer S=O-Gruppe in dem nichtwässrigen Elektrolyten in einem Gehalt von 0,5 bis 5 Gew.-% enthalten ist.

12. Batterie nach Anspruch 1, worin das Carbonat zumindest ein Material ist, ausgewählt aus der Gruppe bestehend aus einem cyclischen Carbonat und linearen Carbonat.

13. Sekundärbatterie nach Anspruch 1, worin die Anode eine spezifische Oberfläche von 1,5 bis 4,5 m²/g hat.

## Revendications

1. Batterie secondaire, comprenant une cathode, une anode, un séparateur entre la cathode et l'anode, un liant pour l'anode, et un électrolyte non aqueux, dans laquelle l'anode a une surface spécifique d'au moins 1,5 m²/g,
dans laquelle l'électrolyte non aqueux comprend (i) un composé ayant un groupe S=O ; (ii) un solvant organique mixte contenant un carbonate et un composé ester à base de propionate exprimé par la Formule Chimique 1 suivante ; et (iii) un sel électrolytique, dans lequel le composé ayant un groupe S=O est au moins un matériau choisi parmi le groupe consistant en un sulfite cyclique, une sultone saturée, une sultone insaturée, et une sulfone non cyclique ;
dans laquelle le liant est un liant soluble dans l'eau, et
dans laquelle le composé ayant le groupe S=O forme un film d'électrode avant le carbonate et le composé ester ayant la Formule Chimique 1 : 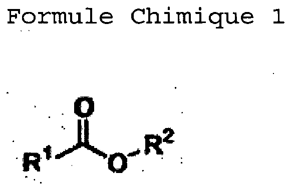 où R¹ est un groupe CH₃CH₂ et R² est un groupe alkyle en C₁-C₆ ou un groupe halogénoalkyle en C₁-C₆.

2. Batterie selon la revendication 1, dans laquelle le sulfite cyclique est un sulfite cyclique exprimé par la Formule Chimique 2 suivante : 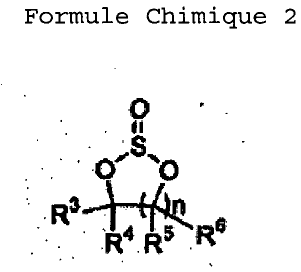 où R³ à R⁶ sont indépendamment un atome d'hydrogène, un atome d'halogène, un groupe alkyle en C₁-C₆ ou un groupe halogénoalkyle en C₁-C₆, respectivement, et n est un entier de 1 à 3.

3. Batterie selon la revendication 1, dans laquelle la sultone saturée est une sultone saturée exprimée par la Formule Chimique 3 suivante : 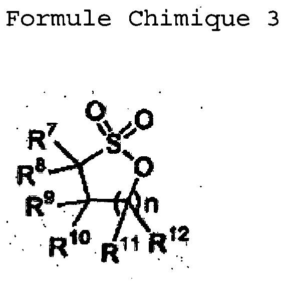 où R⁷ à R¹² sont indépendamment un atome d' hydrogène, un atome d'halogène, un groupe alkyle en C₁-C₆ ou un groupe halogénoalkyle en C₁-C₆, respectivement, et n est un entier de 0 à 3.

4. Batterie selon la revendication 1, dans laquelle la sultone insaturée est une sultone insaturée exprimée par la Formule Chimique 4 suivante : 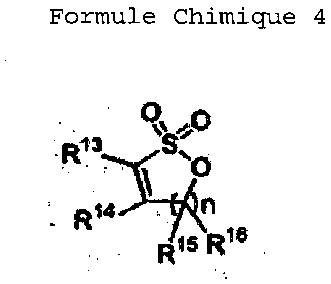 où R¹³ à R¹⁶ sont indépendamment un atome d'hydrogène, un atome d'halogène, un groupe alkyle en C₁-C₆ ou un groupe halogénoalkyle en C₁-C₆, respectivement, et n est un entier de 0 à 3.

5. Batterie selon la revendication 1, dans laquelle la sulfone non cyclique est une sulfone non cyclique exprimée par la Formule Chimique 5 suivante : 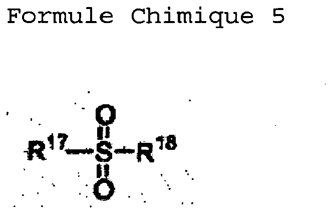 où R¹⁷ et R¹⁸ sont indépendamment un groupe alkyle en C₁-C₆, un groupe halogénoalkyle en C₁-C₆, un groupe alcényle en C₂-C₆, un groupe halogénoalcényle en C₂-C₆, un groupe aryle en C₆-C₁₈, ou un groupe halogénoaryle en C₆-C₁₈, respectivement.

6. Batterie selon la revendication 1, dans laquelle le sulfite cyclique est au moins un matériau choisi parmi le groupe consistant en un sulfite d'éthylène, un sulfite de méthyléthylène, un sulfite d'éthyléthylène, un sulfite de 4,5-diméthyléthylène, un sulfite de 4,5-diéthyléthylène, un sulfite de propylène, un sulfite de 4,5-diméthylpropylène, un sulfite de 4,5-diéthylpropylène, un sulfite de 4,6-diméthylpropylène, un sulfite de 4,6-diéthylpropylène, et un sulfite de 1,3-butylèneglycol.

7. Batterie selon la revendication 1, dans laquelle la sultone saturée est au moins un matériau choisi parmi le groupe consistant en une 1,3-propanesultone et une 1,4-butanesultone.

8. Batterie selon la revendication 1, dans laquelle la sultone insaturée est au moins un matériau choisi parmi le groupe consistant en une éthènesultone, une 1,3-propènesultone, une 1,4-butènesultone, et une 1-méthyl-1,3-propènesultone.

9. Batterie selon la revendication 1, dans laquelle la sulfone non cyclique est au moins un matériau choisi parmi le groupe consistant en une divinylsulfone, une diméthylsulfone, une diéthylsulfone, une méthyléthylsulfone, et une méthylvinylsulfone.

10. Batterie selon la revendication 1, dans laquelle le composé ester à base de propionate exprimé par la Formule Chimique 1 est au moins un matériau choisi parmi le groupe consistant en un propionate de méthyle, un propionate d'éthyle, un propionate de propyle, et un propionate de butyle.

11. Batterie selon la revendication 1, dans laquelle le composé ayant un groupe S=O est inclus dans l'électrolyte non aqueux à une teneur de 0,5 à 5% en poids.

12. Batterie selon la revendication 1, dans laquelle le carbonate est au moins un matériau choisi parmi le groupe consistant en un carbonate cyclique et un carbonate linéaire.

13. Batterie secondaire selon la revendication 1, dans laquelle l'anode a une plage de surface spécifique de 1,5 m²/g à 4,5 m²/g.
